# FASCICULE DE BREVET EUROPEEN

(11) **EP 1 484 859 B1**
(45) Date de publication et mention de la délivrance du brevet: **31.05.2006**
(21) Numéro de dépôt: 04290596.8
(22) Date de dépôt: 05.03.2004
(51) Int. Cl.: H04L 12/14, G07F 19/00, H04M 15/00, H04L 29/06, H04L 29/12

(54) **Procédé de contrôle avec gestion d'un identifiant opaque d'utilisateur de la livraison complète d'un service utilisant un ensemble de serveurs**
Kontrollverfahren mit Verwaltung eines opaken Benutzeridentifikators zur vollständigen Lieferung eines Dienstes mit mehreren Servern
Control method with opaque user identifier administration for complete delivering of a multi-server service

(30) Priorité: 06.06.2003 FR 0306898
(43) Date de publication de la demande: 08.12.2004
(73) Titulaire: Societé Française du Radiotéléphone, 75008 Paris (FR)
(72) Inventeur: Giraud-Sauveur, Christophe, 38330 Montbonnot Saint Martin (FR); Guinet, Fabien, 38340 Pommiers la Placette (FR); Vignaud, Frédéric, 38660 Saint Bernard du Touvet (FR)
(74) Mandataire: Debay, Yves

(56) Documents cités:
- EP-A- 1 263 187
- WO-A-02/11474
- WO-A-02/102016

## Description

La présente invention concerne le domaine des télécommunications et la gestion des services multimédia. La présente invention concerne plus particulièrement un procédé permettant de contrôler la livraison complète d'un service fourni via un ensemble de serveurs «enablers» et en gérant un identifiant opaque d'utilisateur.

Dans tout ce qui suit, on appellera « enabler » ou « service enabler » tout élément serveur capable de délivrer un service. Les définitions des termes techniques d'origine anglaise utilisés dans ce qui suit sont exposées ci-après :
- Commit : action sur une transaction permettant de faire passer son état à définitivement validé
- Rollback : action sur une transaction en échec permettant de signifier l'abandon de la transaction en cours et de repasser le système dans son état initial
- Begin : action marquant le début d'une transaction
- TimeOut : fin du délai d'attente
- Mask : masquer
- Unmask : démasquer
- Start : démarrer
- Completed : notifier le bon achèvement
- Error : notifier l'erreur
- Update : mettre à jour
- Open Transaction: ouvrir la transaction
- Close Transaction : fermer la transaction

II est connu dans l'art antérieur des gestionnaires d'identifiant (GID) sous la forme de systèmes informatiques pourvus d'interfaces permettant de masquer et démasquer l'identité d'un utilisateur à l'aide d'un identifiant opaque. De tels gestionnaires GID fournissent aux systèmes externes un moyen de communiquer avec un utilisateur sans toutefois lui communiquer son identité. Les gestionnaires d'identifiant GID sont mis en place pour des contraintes légales visant à garantir la confidentialité de certaines informations. Les GID ne sont toutefois pas adaptés pour gérer les notions de session ou de transaction liées à la fois à un service et à un utilisateur ou groupe donné d'utilisateurs.

Il est également connu des gestionnaires de dialogue (GD) constitués par un système informatique imbriqué dans un système de gestion de la facturation de services. Les gestionnaires de dialogue GD assurent d'une part un dialogue avec l'utilisateur pour informer celui-ci du prix d'un service et obtenir sa confirmation, et d'autre part le déclenchement de la facturation à la fin d'un service. Le gestionnaire de dialogue GD est exclusivement orienté vers les problèmes de facturation et les mises en oeuvre d'un gestionnaire GD sont technologiquement dépendantes de l'élément serveur capable de créer et fournir des services « enabler ».

Il existe aussi des gestionnaires d'offre (GO) servant à vérifier le bon déroulement de l'offre de service. Les GO sont pour la plupart technologiquement dépendants de l'élément serveur capable de créer et fournir des services « enabler ». Ils sont donc souvent «mono-élément serveur» voire mono-requête. Ils ne sont donc pas capables de traiter le bon déroulement d'un service «multi-éléments serveurs» de bout en bout.

Il est connu par ailleurs des plates-formes logicielles « frameworks » de développement de service, qui fournissent en général un accès contrôlé aux ressources du réseau de l'opérateur à des partenaires. Ces partenaires peuvent être des fournisseurs de services à valeur ajoutée VASP (de l'anglais Value Added Service Provider). Les plates-formes OSA (Open Service Architecture) ou PARLAY sont des exemples de telles plate-formes « frameworks ». OSA permet ainsi de définir une interface avec un réseau de radiotéléphonie mobile qui offre des capacités standard. PARLAY est comparable à OSA mais pour le réseau fixe de téléphonie. De telles plate-formes de développement de services fonctionnent :
- soit en mode proxy, ce qui impose une intégration technique de la plate-forme logicielle « framework » par les partenaires fournisseurs de services à valeur ajouté VASP et en outre une remise à jour de la plate-forme logicielle « framework » pour y intégrer de nouveaux éléments serveurs « enablers » capables de créer et fournir des services ou simplement de nouvelles interfaces sur des éléments serveurs capables de créer et fournir des services « existants »,
- soit en mode répertoire « directory » ce qui implique qu'une fois la référence allouée sur l'élément serveur capable de créer et fournir des services « enabler » par la plate-forme logicielle « framework », plus aucune information statistique ne passe par lui.

If est ainsi connu, par le document WO 02/102016, un système d'accès à des services sur le réseau Internet permettant de délivrer des autorisations pour un type déterminé de services et de fournir via un ou plusieurs serveurs spécifiques des services a un terminal d'utilisateur Ce type de système permet d'éviter à l'utilisateur de s'authentifier auprès de chaque serveur spécifique mais permet difficilement la mise à jour de nouveau services accessibles ou la prise en compte de nouveaux besoins de l'utilisateur,

Il n'existe donc pas de solution actuelle susceptible de pouvoir assurer la gestion d'une session de service à un abonné qui utilise plusieurs éléments serveurs « enablers » du réseau de l'opérateur de télécommunication. Il n'est alors pas possible de générer des événements sur la complète (ou incomplète) réalisation du service.

Un objet de la présente invention est de supprimer ces inconvénients de l'art antérieur. Ainsi, l'invention décrite dans ce document fournit une solution permettant d'adresser les problématiques suivantes:
- l'assurance de la bonne livraison d'un service utilisant les éléments serveurs « enablers » d'un réseau opérateur,
- la garantie de la QoS (Qualité de Service) de bout en bout,
- le contrôle de l'accès aux éléments serveurs « enablers » pour un utilisateur et un service donné,
- l'obtention des informations statistiques sur l'utilisation et la réalisation d'un service aussi bien en mode Pull/MO (Mobile Originated) provenant d'une requête du mobile qu'en mode Push/MT (Mobile Terminated) provenant d'une requête d'un élément serveur à destination d'un mobile,
- la gestion des identifiants opaques qui permet à l'opérateur de garantir la confidentialité de l'utilisateur vis-à-vis des fournisseurs de service.

A cet effet, l'invention concerne un procédé de contrôle avec gestion d'un identifiant opaque d'utilisateur de la livraison complète d'un service utilisant au moins un serveur, caractérisé en ce qu'il est réalisé par l'intermédiaire d'un moyen serveur d'identifiant transactionnel stockant dans une mémoire pour chaque utilisateur une description d'une pluralité d'offres de service souscrite par l'utilisateur auprès des fournisseurs de service, ledit moyen serveur d'identifiant transactionnel comprenant un module de gestion permettant d'associer à un utilisateur ou groupe d'utilisateurs et à au moins un service déterminé un identifiant transactionnel opaque, ledit procédé comprenant les étapes suivantes :
- émission par un élément serveur « enabler» ayant intercepté une demande de service d'un utilisateur ou par un desdits fournisseurs de service d'une requête d'ouverture de transaction d'au moins un service faisant appel à au moins un élément serveur « enabler » déterminé réalisant des sous-transactions, cette requête étant décrite de manière séquentielle avec un lot de primitives ouvertes et adressée à une interface de communication du moyen serveur d'identifiant transactionnel et notifiant une identification de l'utilisateur,
- analyse de la requête et génération d'un identifiant transactionnel opaque par des moyens de gestion et de contrôle du serveur d'identifiant transactionnel, puis
- une étape de réalisation de la transaction utilisant l'identifiant transactionnel opaque.

L'invention permet donc d'accéder à l'offre d'un service tout en garantissant la confidentialité de l'utilisateur vis-à-vis des fournisseurs de service, par utilisation d'un identifiant opaque de session pour un utilisateur autorisé.

Selon une autre particularité de l'invention, l'étape d'analyse comprend une vérification par le module de gestion de la correspondance des éléments serveurs « enablers » déterminés avec une offre de service répertoriée accessible pour l'utilisateur parmi la pluralité d'offres de service et un contrôle de l'autorisation d'ouverture de la transaction par des moyens de contrôle du moyen serveur d'identifiant transactionnel, pour le service fourni par les éléments serveurs « enablers » et l'utilisateur spécifié, en fonction notamment de l'identification de l'utilisateur.

Selon une autre particularité de l'invention, l'étape de réalisation de la transaction est initiée par un fournisseur de service à valeur ajoutée ayant reçu l'identifiant transactionnel opaque de la part du moyen serveur d'identifiant transactionnel, le fournisseur d'offres de service effectuant une demande à un élément serveur enabler déterminé, avec l'identifiant transactionnel opaque en paramètre, d'un service déterminé constituant une sous-transaction, pour déclencher en réponse sur l'élément serveur enabler déterminé l'envoi vers le serveur d'identifiant transactionnel d'une requête de démasquage « unmask » permettant à partir de l'identifiant opaque la fourniture d'un numéro d'identification non opaque correspondant à l'identifiant transactionnel opaque, un contrôle étant ensuite réalisé par les moyens de contrôle du moyen serveur d'identifiant transactionnel pour vérifier si l'élément serveur déterminé « enabler» est autorisé ou non pour ce service et pour cet utilisateur, de sorte qu'en cas d'autorisation, le numéro d'identification non opaque (MS-ISDN) est transmis via une interface de communication dite interface enabler vers l'élément serveur déterminé pour permettre la réalisation de la sous-transaction.

Selon une autre particularité de l'invention, l'identifiant transactionnel, est composé d'au maximum 15 digits, et conforme au plan de numérotation UIT-T E-164 et le numéro d'identification non opaque est le numéro MSISDN (Mobile Station Integrated Services Digital Network).

Selon une autre particularité de l'invention, le moyen serveur d'identifiant transactionnel (GIDT) comporte, d'une part un moteur transactionnel générant des émissions d'événements transactionnels constitués de l'une ou l'autre des commandes suivantes : BEGIN, COMMIT, ROLLBACK et d'autre part d'un moteur de traçabilité consignant dans ladite mémoire chaque événement du moteur transactionnel et l'ensemble des informations émises pendant l'utilisation du moyen serveur d'identifiant transactionnel.

Selon une autre particularité de l'invention, l'identifiant transactionnel opaque est envoyé au fournisseur d'offres de service après la mémorisation dans la mémoire du moyen serveur d'identifiant transactionnel, d'un contexte transactionnel indiquant notamment :
- le numéro d'identification de l'utilisateur,
- l'identifiant transactionnel,
- l'offre associée à la transaction,
- l'état d'avancement de la transaction pour l'offre associée à celle-ci (nombre de sous-transactions achevées, sous-transactions restant à exécuter, ...).

Selon une autre particularité de l'invention, l'envoi de l'identifiant transactionnel opaque au fournisseur d'offres de service est précédé en outre d'une génération d'un événement transactionnel représentatif d'un début de transaction vers au moins un système externe, par l'intermédiaire d'une seconde interface de communication du moyen serveur d'identifiant transactionnel, dite interface de notification des transactions.

Selon une autre particularité de l'invention, la génération d'un événement transactionnel représentatif d'un début de transaction vers au moins un système externe s'effectue par une commande BEGIN générée par un moteur transactionnel du moyen serveur d'identifiant transactionnel.

Selon une autre particularité de l'invention, le moyen serveur d'identifiant transactionnel transmet, depuis l'interface de notification des transactions à au moins un système externe, des données représentatives de la réalisation complète de l'offre par une commande COMMIT générée par le moteur transactionnel pour indiquer au système externe par exemple de facturation que la transaction est complètement réalisée.

Selon une autre particularité de l'invention, le moyen serveur d'identifiant transactionnel, émet, via l'interface de notification des transactions, un événement transactionnel de type fin de reprise ROLLBACK pour signifier à au moins un système externe que le nombre de reprises de la transaction sur erreur est dépassé et que la transaction est annulée pour fournir des données à un gestionnaire de dialogue et pour facturer ou non le service.

Selon une autre particularité de l'invention, les moyens de gestion et de contrôle du serveur d'identifiant transactionnel effectuent l'analyse de la requête d'ouverture de transaction notamment par résolution d'une correspondance entre une adresse technique de service notifiée dans la requête d'ouverture de transaction et une offre de service répertoriée parmi la pluralité de descriptions d'offres de service stockées dans la mémoire du moyen serveur d'identifiant transactionnel.

Selon une autre particularité de l'invention, la mémoire du moyen serveur d'identifiant transactionnel stocke des descriptions d'offres de service validées par lesdits fournisseurs, saisies par l'intermédiaire d'une troisième interface de communication dite interface de fourniture des descriptions de service.

Selon une autre particularité de l'invention, la description d'une offre de service comprend des données formulées dans un méta langage ou forme équivalente permettant aux moyens de contrôle du moyen serveur d'identifiant transactionnel de contrôler le bon déroulement du service et d'en détecter le début et la fin.

Selon une autre particularité de l'invention, le moyen serveur d'identifiant transactionnel comporte une interface de communication supplémentaire destinée aux fournisseurs de services à valeur ajoutée, la première interface étant destinée aux éléments serveurs.

Selon une autre particularité de l'invention, le moyen serveur d'identifiant transactionnel comporte une logique interne réalisant les méthodes suivantes : Start, Completed, Error, Mask, Unmask, Update, OpenTransaction, Close Transaction.

Selon une autre particularité de l'invention, la méthode Start du moyen serveur d'identifiant transactionnel génère un identifiant transactionnel, crée un contexte transactionnel en mémoire, génère un événement transactionnel de type BEGIN et retourne l'identifiant transactionnel au fournisseur d'offres de service.

Selon une autre particularité de l'invention, la méthode Completed du moyen serveur d'identifiant transactionnel détermine par un test si une sous-transaction de la transaction a été réalisée, modifie en conséquence le contexte transactionnel, détermine, en scrutant la description de l'offre s'il est nécessaire que le moyen serveur d'identifiant transactionnel attende un événement extérieur, positionne la logique soit en attente d'un temps écoulé « TimeOut » soit d'une fermeture de transaction « CloseTransaction », vérifie si la transaction est achevée et génère un événement transactionnel de type COMMIT.

Selon une autre particularité de l'invention, la méthode Error du moyen serveur d'identifiant transactionnel vérifie si le nombre de reprise sur erreur est dépassé et dans l'affirmative génère un événement transactionnel de type ROLLBACK.

Selon une autre particularité de l'invention, la méthode Mask est émise par un élément serveur « enabler » pour retrouver les informations de l'offre ciblée à partir de l'adresse technique et de ladite pluralité d'offres, contrôler l'accès d'un utilisateur abonné à l'offre de service et émettre soit un refus d'accès soit déclencher la méthode Start.

Selon une autre particularité de l'invention, la méthode Unmask est émise par un élément serveur « enabler » pour retrouver les informations de l'offre ciblée à partir de données représentatives de l'adresse technique et l'identifiant transactionnel (trid) et à partir du catalogue des offres, contrôler l'accès d'un fournisseur partenaire à l'élément serveur « enabler », vérifier que la requête faite à l'élément serveur est en correspondance avec l'état actuel de la transaction et signaler à l'élément serveur que le moyen serveur d'identifiant transactionnel est en attente d'une mise à jour, retourner le MSISDN associé à l'identifiant transactionnel opaque, se mettre en attente de la mise à jour, puis vérifier que la mise à jour reçue contient les informations nécessaires pour la réalisation de l'offre pour soit émettre une méthode Completed soit une méthode Error.

Selon une autre particularité de l'invention, la méthode Update est émise par un élément serveur « enabler » et constituée par la mise en état d'attente de mise à jour concernant la réalisation de la requête du serveur d'identifiant transactionnel.

Selon une autre particularité de l'invention, la méthode OpenTransaction est émise par un fournisseur de services à valeur ajoutée pour contrôler l'accès d'un partenaire à un abonné de l'opérateur et produire soit un refus d'accès soit déclencher une méthode Start.

Selon une autre particularité de l'invention, la méthode CloseTransaction est émise par un fournisseur de services à valeur ajoutée et génère un événement permettant de débloquer l'attente « TimeOut » de la logique du moyen serveur d'identifiant transactionnel.

L'invention, avec ses caractéristiques et avantages, ressortira plus clairement à la lecture de la description faite en référence aux dessins annexés donnés à titre d'exemples non limitatifs dans lesquels :
- la figure 1 représente schématiquement un exemple de processus mis en oeuvre dans l'invention, dans une variante en mode Push/MT,
- la figure 2 représente trois éléments de logique utilisés par le moyen serveur d'identifiant,
- la figure 3 représente des schémas de logiques d'états associées aux interactions entre les éléments serveurs « enablers » du réseau et le moyen serveur d'identifiant,
- la figure 4 représente un exemple de logiques d'état associées aux interactions entre des fournisseurs de service à valeur ajoutée et le moyen serveur d'identifiant,
- la figure 5 représente schématiquement un exemple de processus mis en oeuvre dans l'invention, dans une variante en mode Pull/MO. De plus, l'annexe précise les abréviations utilisées dans la présente demande.

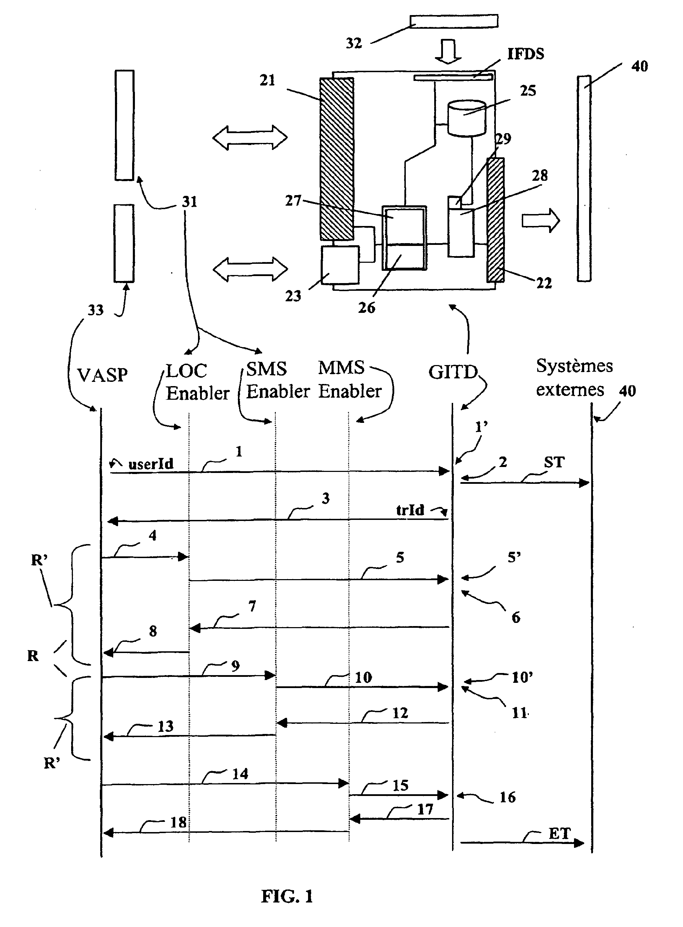

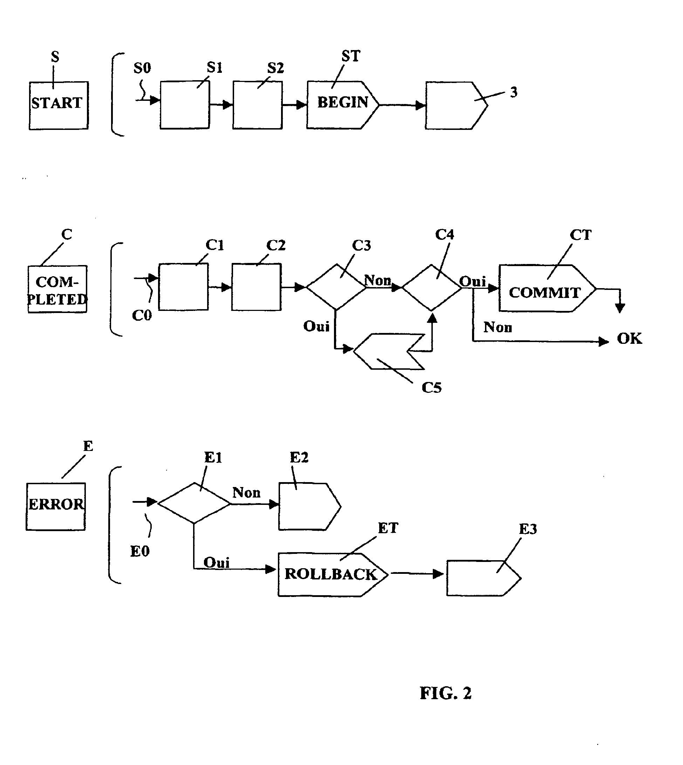

L'invention va à présent être décrite en liaison avec les figures 1 et 2.

Le procédé selon l'invention est réalisé par l'intermédiaire d'un moyen serveur d'identifiant transactionnel qu'on appellera par la suite gestionnaire d'identifiant transactionnel (GIDT). Ce moyen serveur d'identifiant (GIDT) permet d'associer un élément d'identification (UserId) correspondant à un utilisateur (ou un groupe d'utilisateurs) pour une transaction ou une sous-transaction sur un service donné. Cet identifiant transactionnel (trid) est utilisé en substitution du numéro MS-ISDN (Mobile Station - Integrated Services Digital Network) dans la communication avec les fournisseurs de service partenaires (33) tels que VASP, fournisseurs d'applications et portails spécialisés ou autres partenaires et a pour caractéristique d'être conforme à la recommandation d'un plan de numérotation normalisé, par exemple UIT - T E.164, ce qui impose une séquence d'au maximum 15 digits dont une partie de l'information peut permettre d'identifier l'opérateur susceptible d'interpréter cet identifiant transactionnel (trid). Le gestionnaire d'identifiant transactionnel (GIDT) comprend une première interface (21) de communication pour permettre la transmission de données avec des serveurs ou enablers (31). Ce gestionnaire (GIDT) comprend en outre une seconde interface (22) de communication, dite interface de notification des transactions, permettant la génération d'événements transactionnels représentatifs d'un début (ST), d'une finalisation (CT) ou d'une annulation (ET) de transaction vers n'importe quel système externe (40). Cette interface (22) permet par exemple de relier le gestionnaire (GIDT) à un ou plusieurs systèmes externes (40) de facturation et/ou à un gestionnaire de dialogue.

Comme représenté à la figure 1, le gestionnaire d'identifiant transactionnel (GIDT) comprend un module de gestion (27) permettant d'associer à un utilisateur ou groupe d'utilisateurs et à au moins un service déterminé un identifiant dit transactionnel (trid). Le gestionnaire (GIDT) peut par exemple gérer l'abonnement des utilisateurs à des offres de service auprès des fournisseurs de service (33). En variante, le gestionnaire d'identifiant transactionnel (GIDT) peut aussi se connecter à un gestionnaire des abonnements. La mémoire (25) du gestionnaire (GIDT) permet notamment de mémoriser des descriptions d'offres de service validées par les fournisseurs (31), et de stocker une pluralité de contextes transactionnels relatifs à un utilisateur ou groupe d'utilisateur pour un service. Chaque contexte transactionnel indique notamment le numéro d'identification (UserId) de l'utilisateur, l'identifiant transactionnel (trid), l'offre associée à la transaction et l'état d'avancement de la transaction. Cet état d'avancement peut être décrit par exemple par le nombre de sous-transactions (R') achevées, de sous-transactions (R') restant à exécuter. Les descriptions d'offres de service peuvent être saisies par un système d'approvisionnement (32) avec une troisième interface de communication dite interface de fourniture des descriptions de service (IFDS).

Comme représenté à la figure 1, le gestionnaire d'identifiant transactionnel (GIDT) peut se placer au coeur d'une plate-forme logicielle susceptible de :
- gérer les identifiants transactionnels (trid),
- gérer les informations statistiques des accès aux requêtes de démasquage par les enablers (31) du réseau,
- stocker une représentation du service, et plus particulièrement son séquencement/déroulement,
- contrôler le déroulement d'un service et donc s'assurer de sa réalisation de bout en bout,
- émettre des triggers transactionnels, par exemple BEGIN (ST) pour commencer, COMMIT (CT) pour exécuter, ROLLBACK (ET) pour annuler (figure 2).

Pour parvenir à gérer les identifiants transactionnels (trid), le module de gestion (27) est relié à la mémoire (25) et à l'interface de fourniture des descriptions de service (IFDS). Dans un mode de réalisation de l'invention, la mémoire (25) du gestionnaire d'identifiant transactionnel (GIDT) stocke des descriptions d'offres de service transmises par le système d'approvisionnement (32) en descriptions de service qui utilise l'interface de fourniture (IFDS). Ce système d'approvisionnement (32), dont tiennent compte les fournisseurs partenaires (33), permet de fournir une description complète d'un service. Dans un mode de réalisation de l'invention, la mémoire (25) stocke des descriptions détaillant les services, notamment le mode de communication avec les éléments enablers (LOC, SMS, MMS) qui font partie de l'offre. Cette description pourrait être définie à partir d'un méta langage, Expression Régulière, XML Schéma ou DTD par exemple, ou sous tout autre forme permettant au gestionnaire d'identifiant transactionnel (GIDT) de contrôler le bon déroulement d'un service et d'en détecter le début et la fin. Les fournisseurs partenaires (33) ont connaissance du mode de description de leur service, de telle sorte qu'une offre correspondant à la description attendue, incluant un ou plusieurs services, peut être effectivement réalisée.

Par exemple dans le cas d'une offre de service faisant intervenir un enabler de localisation (LOC), un enabler de messages courts (SMS) et un enabler de messages multimédia (MMS), la description du service peut se présenter sous la forme suivante : « (SMS_MO, LOC, MMS) », c'est-à-dire que le service complet doit être composé d'un SMS_MO, d'une demande de localisation et de l'envoi d'un message multimédia. Dans un autre exemple, la description peut être formulée comme suit : « (LOC, WAP-PUSH+, [close-transaction|timeout(2 jours)]) », ce qui signifie que le service doit être composé d'une demande de localisation, suivie de 1 à n push WAP. La fin de service est déclenchée soit sur un délai d'attente dit timeout, soit par un ordre de fermeture de transaction dit close-transaction explicite d'un serveur enabler (31) ou du fournisseur de service (33).

La description de service peut aussi détailler le contenu de chaque requête à un élément serveur enabler (31) comme par exemple « (SMS_MO: BLAGUE*,MMS) », pour signifier que le service doit être composé d'un SMS_MO commençant par BLAGUE et d'un message multimédia. Dans une variante de réalisation de l'invention, la description du service peut éventuellement incorporer des sous-parties transactionnelles, susceptibles par exemple d'être définies comme imbriquées. Ainsi, dans le cas d'une description XML, les mécanismes d'import ou de référence peuvent être utilisés. Dans ce cas-là, la réalisation d'un service peut être conditionnée par la réalisation de sous-parties transactionnelles. Ces dernières sont éventuellement facturées séparément par un système externe (40) de facturation. Les serveurs enablers (LOC, SMS, MMS) de la figure 1 ne sont cités qu'à titre d'exemple. N'importe quel autre élément serveur enabler comme CAMEL, WAP-server, etc. peut être utilisé dans le processus mis en oeuvre avec le gestionnaire d'identifiant transactionnel (GIDT).

Dans un mode de réalisation de l'invention, le moyen serveur d'identifiant transactionnel (GIDT) comporte une interface de communication supplémentaire (23) destinée aux fournisseurs de service à valeur ajoutée (33) ou équivalent, la première interface (21) étant destinée aux éléments serveurs (LOC, SMS, MMS) du réseau. Cette interface supplémentaire (23) permet à un fournisseur partenaire (33) d'ouvrir une transaction pour un utilisateur donné sur un type de service. Cette interface (23) n'est nécessaire que dans le cas où un fournisseur de service (33) initie le service vers l'abonné, c'est-à-dire en mode PUSH, comme dans la forme de réalisation de la figure 1 par exemple. Dans le cas d'une description de service ouverte, le fournisseur partenaire (33) de type VASP ou analogue peut avoir à sa disposition une méthode lui permettant de signifier que le service a, selon lui, été réalisé. Par ailleurs, cette interface supplémentaire (23) étant optionnelle, le gestionnaire (GIDT) constitue dans la plupart des cas un composant transparent pour les partenaires VASP ou partenaires analogues.

L'invention va à présent être décrite en liaison avec la figure 2.

La figure 2 présente trois éléments de logique d'une logique interne utilisée par le module de gestion (27) pour gérer avec un identifiant transactionnel (trid) opaque d'utilisateur la livraison complète du service, selon le processus de l'invention. Parmi les trois méthodes réalisées par cette logique interne, la méthode appelée communément START (S) exécute successivement les opérations suivantes, après récupération préalable (S0) du numéro d'identification (UserId) MSISDN :
- génération (S1) d'un identifiant transactionnel d'après les données fournies, dont notamment le numéro MSISDN,
- création (S2) d'un contexte transactionnel comprenant le numéro d'identification (UserId) MSIDSN, l'identifiant transactionnel (trid), l'offre associée à la transaction et l'état d'avancement de la transaction,
- stockage du contexte transactionnel dans la mémoire (25) du gestionnaire (GIDT),
- génération d'un événement transactionnel BEGIN (ST) envoyé vers les systèmes externes (40) pour notifier le début de la transaction, puis,
- envoi (3) par le gestionnaire d'identifiant transactionnel (GIDT) au fournisseur de service (31) de l'identifiant de transaction (trid) correspondant au service.

La méthode appelée communément Completed (C) du moyen serveur d'identifiant transactionnel (GIDT) détermine par un test (C1) si une sous-transaction de la transaction a été complètement réalisée (C0), puis modifie (C2) en conséquence le contexte transactionnel. De plus, la méthode Completed (C) détermine, en scrutant la description de l'offre (C3) s'il est nécessaire que le moyen serveur d'identifiant transactionnel (GIDT) attende (C5) un événement extérieur, positionne la logique soit en attente d'un temps écoulé « TimeOut » soit d'une fermeture de transaction « CloseTransaction ». Enfin, cette méthode permet de vérifier (C4) si la transaction est achevée et de générer un événement transactionnel de type COMMIT (CT). On comprend que l'élément de logique correspondant à la méthode COMPLETED (C) permet d'effectuer un contrôle de l'évolution de la transaction. Plusieurs sous-transactions (R') peuvent être successivement réalisées au sein d'une même transaction avec cette méthode. Dans le mode de réalisation de la figure 2, la méthode COMPLETED (C) comprend ainsi les opérations suivantes :
- éventuellement, test de contrôle (C1) de fin de réalisation (CO) d'une sous-transaction (R'), et modification (C2) de l'état d'avancement de la transaction mémorisé dans le contexte transactionnel en y intégrant la sous-transaction (R') réalisée,
- scrutation de la description de l'offre (C3) pour déterminer s'il est nécessaire que le gestionnaire (GIDT) attende un événement extérieur,
- dans un premier cas, positionnement de la logique en attente (C5) d'un événement, cette attente s'achevant à l'issue d'un délai « TimeOut » ou d'une fermeture de transaction « Close-Transaction », sinon, si aucun événement particulier n'est attendu, vérification (C4) de l'état d'avancement de la transaction, puis
- génération d'un événement transactionnel COMMIT (CT) envoyé vers les systèmes externes (40) pour notifier la fin de la sous-transaction.

Le gestionnaire d'identifiant transactionnel (GIDT) peut transmettre, depuis l'interface de notification des transactions (22) vers n'importe quel système externe (40), des données représentatives de la complète réalisation d'un service par la commande COMMIT (CT) générée par le moteur transactionnel (28) pour indiquer au système externe (40) par exemple de facturation que la transaction est complètement réalisée. Le gestionnaire (GITD) mémorise en outre dans la mémoire (25) cette évolution du contexte transactionnel. L'étape de vérification (C4) permet notamment de faire la différence entre la fin de la toute dernière sous-transaction (R') et la fin d'une sous-transaction (R') intermédiaire. L'état d'avancement de la réalisation de la transaction peut donc être déterminé.

La logique interne du moyen serveur d'identifiant transactionnel (GIDT) réalise également une méthode communément appelée ERROR (E) qui permet de détecter et de signaler la présence d'erreur ayant une incidence dans le processus selon l'invention. Un code d'erreur (E0) est reçu par un moyen comparateur vérifiant le nombre de reprises sur erreur. Une comparaison (E1) est effectuée entre le nombre de reprises sur erreur et un seuil prédéterminé. Tant que le seuil n'est pas atteint, l'erreur est jetée (E2) et n'entraîne aucune conséquence sur le contexte transactionnel. Dans le cas contraire, un événement transactionnel ROLLBACK (ET) est envoyé vers les systèmes externes (40) pour annuler le contexte transactionnel. Dans un mode de réalisation de l'invention, l'identifiant transactionnel (trid) est aussitôt supprimé.

L'invention va à présent être décrite en liaison avec les figures 1, 2 et 3.

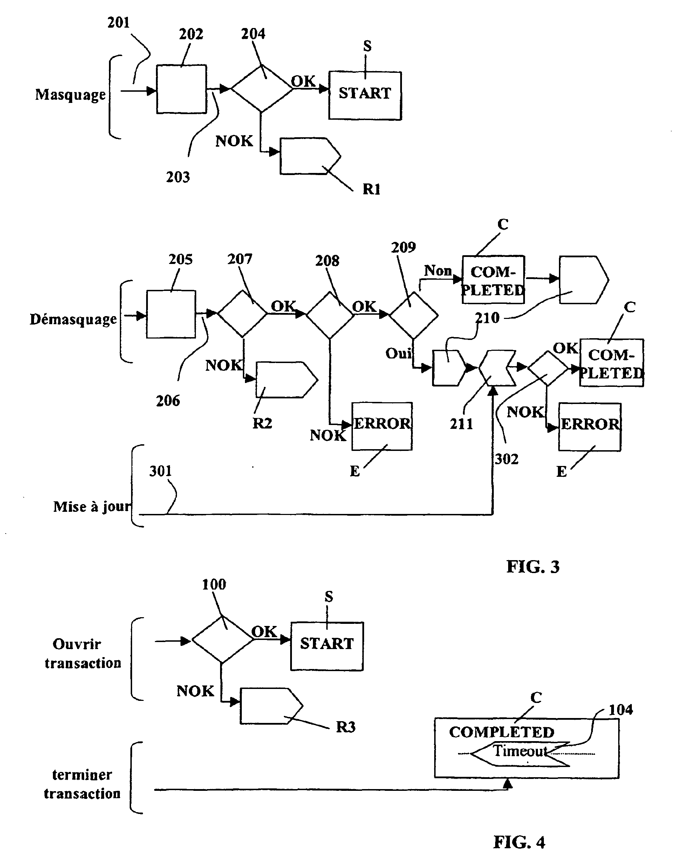

La première interface (21) de communication permet d'initialiser une transaction pour un service et un utilisateur donné. Elle donne aussi un accès à la requête de démasquage (5, 10) de l'identifiant transactionnel (trid) initiée par un élément enabler (31). Cette requête (5, 10) permet de retrouver la plupart du temps le numéro d'identification (UserId) constitué par exemple du numéro MSISDN. Il est possible aussi d'effectuer une requête (301) de mise à jour du service ou Update, adressée à cette interface (21). Comme illustré à la figure 3, la requête (301) de mise à jour Update peut être associée à la réalisation concrète de la requête enabler (LOC, SMS, MMS) jusqu'à l'utilisateur abonné à l'offre de service, dans le but de s'assurer de la bonne livraison du service. La requête Update est par exemple également associée au contenu de l'information qui transite de l'élément enabler (31) à l'abonné, afin de permettre la vérification du contenu du service.

Dans un mode de réalisation de l'invention, la méthode de mise à jour Update est émise par un élément serveur enabler (31). Elle est constituée par la mise en état d'attente de mise à jour concernant la réalisation de la requête du serveur d'identifiant transactionnel (GIDT). La mise à jour peut être réalisée de manière asynchrone à la réalisation de la requête à un élément enabler (31) mais peut conditionner le COMMIT (CT) transactionnel de l'ensemble ou partie de l'offre de service. Par exemple, dans le cas d'un enabler (SMS) de messages courts, des messages asynchrones de notification de délivrance peuvent être utilisés pour s'assurer que le contenu a été délivré à l'utilisateur.

Le processus selon l'invention peut aussi bien fonctionner en mode Push/MT qu'en mode Pull/MO, l'émission d'une requête d'ouverture de transaction (1) d'au moins un service déterminé pouvant être initiée soit par un utilisateur, soit par un fournisseur de service (33). Dans l'exemple de la figure 1, c'est le fournisseur (33) qui demande l'ouverture d'une transaction au gestionnaire (GIDT) pour le compte d'un utilisateur représenté dans la requête par un identifiant (UserId) du type numéro de téléphone ou tout autre identifiant d'utilisateur. Cette requête (1) est adressée en mode Push vers la première interface de communication (21) du gestionnaire (GIDT). Ce dernier procède alors à l'analyse (1') de la requête (1) par l'intermédiaire de moyens de gestion et de contrôle (26, 27) du gestionnaire (GIDT), afin de vérifier la correspondance du service objet de la requête avec une offre de service répertoriée parmi la pluralité d'offres de services stockées en mémoire (25). Ces moyens de gestion et de contrôle (26, 27) effectuent l'analyse (1') notamment par résolution d'une correspondance entre une adresse technique de service notifiée dans la requête (1) d'ouverture de transaction et une offre de service répertoriée parmi la pluralité de descriptions d'offres de service stockées dans la mémoire (25) du moyen serveur d'identifiant (GIDT). Dans le mode de réalisation de la figure 1, une adresse technique est insérée dans la requête d'ouverture de transaction (1) pour décrire le service fourni par le fournisseur (31) à l'origine de la requête (1). Cette adresse technique est "résolue" par le gestionnaire (GIDT), et ce dernier associe à cette adresse technique un identifiant transactionnel (trid).

Dans un mode de réalisation de l'invention, l'étape d'analyse (1') comprend une vérification par le module de gestion (27) de la correspondance des éléments serveurs « enablers » (31) désignés dans l'adresse technique avec une offre de service répertoriée accessible pour l'utilisateur parmi la pluralité d'offres de service et un contrôle de l'autorisation d'ouverture de la transaction par des moyens de contrôle (26) du moyen serveur d'identifiant transactionnel (GIDT), pour le service fourni par ces éléments serveurs « enablers » (31) et l'utilisateur spécifié, en fonction notamment de l'identification de l'utilisateur (UserId). L'étape de réalisation (R) de la transaction utilisant l'identifiant transactionnel opaque (trid) succède à l'étape d'analyse (1') de la requête (1).

Dans le mode de réalisation de la figure 1, la requête d'ouverture de transaction (1) émise par le fournisseur de service (33) concerne un service faisant appel à trois éléments serveurs « enablers » (LOC, SMS, MMS) réalisant des sous-transactions (R'). Cette requête (1), adressée à l'interface de communication (23) avec les fournisseurs du gestionnaire d'identifiant transactionnel (GIDT), peut être décrite de manière séquentielle avec un lot de primitives ouvertes et notifie une identification de l'utilisateur (UserId). Dans un autre mode de réalisation de l'invention, la requête (1) peut concerner au moins un service faisant appel à un ou plusieurs éléments serveurs « enablers » (31).

L'étape de réalisation (R) de la transaction est initiée par le fournisseur de service (33), après réception de l'identifiant transactionnel opaque (trid). Le fournisseur de service (33) effectue une demande à un serveur déterminé (LOC, SMS, MMS) parmi les éléments serveurs enablers (31), avec l'identifiant transactionnel opaque (trid) en paramètre, d'un service déterminé constituant une sous-transaction (R'), comme illustré à la figure 1. En réponse à cette demande, l'élément serveur enabler déterminé (LOC, SMS, MMS) envoie vers le gestionnaire d'identifiant transactionnel (GIDT) une requête (5, 10) de démasquage « unmask » pour autoriser à partir de l'identifiant opaque (trid) la fourniture d'un numéro d'identification (UserId) non opaque correspondant à l'identifiant transactionnel opaque (trid). Un contrôle (5', 10') est ensuite réalisé par les moyens de contrôle (26) du moyen serveur d'identifiant transactionnel (GITD) pour vérifier si l'élément serveur déterminé « enabler» (LOC, SMS, MMS) est autorisé ou non pour ce service et pour cet utilisateur, de sorte qu'en cas d'autorisation, le numéro d'identification (UserId) non opaque est transmis (7, 12) via la première interface de communication (21) vers l'élément serveur déterminé (LOC, SMS, MMS) pour permettre la réalisation de la sous-transaction (R').

Dans l'exemple de la figure 1, la première sous-transaction (R') concerne un service de localisation faisant intervenir un serveur de localisation (LOC). Cette première sous-transaction (R') commence par une demande de localisation (4) effectuée par le fournisseur de service (33) et adressée au serveur de localisation (LOC) avec l'identifiant de transaction (trid) en paramètre. Après avoir reçu le numéro d'identification (UserId) non opaque transmis (7) par le gestionnaire (GIDT), le serveur de localisation (LOC) transmet (8) les informations de localisation demandées au fournisseur d'offres de service (31).

Dans le mode de réalisation préféré de l'invention, le gestionnaire d'identifiant transactionnel (GIDT) comporte, d'une part un moteur transactionnel (28) générant des émissions d'événements transactionnels constitués de l'une ou l'autre des commandes suivantes : BEGIN (ST), COMMIT (CT), ROLLBACK (ET) et d'autre part d'un moteur de traçabilité (29) consignant dans la mémoire (25) chaque événement du moteur transactionnel (28) et l'ensemble des informations émises pendant l'utilisation du gestionnaire d'identifiant transactionnel (GIDT). Comme représenté à la figure 1, l'étape d'analyse (1') avec contrôle d'autorisation pour l'ouverture de la transaction est immédiatement suivie de l'envoi vers au moins un système externe (40) d'un événement de début de transaction, sous la forme d'une commande BEGIN (ST) générée par le moteur transactionnel (28). La génération de l'événement de début de transaction est réalisée par l'intermédiaire de l'interface de notification des transactions (22) du gestionnaire (GIDT).

Le système externe (40) peut consister en un système de facturation par exemple pour réserver un ticket de facturation. L'étape d'analyse (1') est également suivie d'un enregistrement par le moteur de traçabilité (29) de statistiques d'ouverture de service, réalisé sensiblement au même moment que la génération de la commande BEGIN (ST). Dès que l'événement de début de transaction a été envoyé vers le système externe (40), une sous-transaction (R') peut être réalisée. Le moteur de traçabilité (29) enregistre également des statistiques (6, 11) à la fin de chacune des sous-transactions (R'). Le contexte transactionnel est mis à jour lors de la fin de réalisation d'une sous-transaction (R'). Naturellement, des systèmes du type gestionnaires de dialogue, IHM, systèmes de paiement à l'acte ou forfait et autres systèmes analogues peuvent se greffer sur le moteur transactionnel (28). Dans un mode de réalisation de l'invention, le moteur de traçabilité (29) dispose de l'ensemble des informations émises par l'utilisation du gestionnaire d'identifiant transactionnel (GIDT), par exemple sur le contrôle d'accès qu'il soit positif ou négatif, sur la réalisation de l'offre qu'elle soit complète ou en cours, etc.

Dans l'exemple de la figure 1, la deuxième sous-transaction (R') fait intervenir un serveur de messages courts (SMS), le fournisseur de service (33) effectuant une demande (4) au serveur (SMS). Le mode de communication est analogue au cas susmentionné pour la sous-transaction (R') avec le serveur de localisation (LOC). Cette fois, après avoir reçu le numéro d'identification (UserId) non opaque transmis (12) par le gestionnaire (GIDT), le serveur (SMS) transmet (13) les informations de messages courts demandées au fournisseur de service (33). Une troisième sous-transaction fait intervenir un serveur enabler de messages multimédia (MMS). Dans l'exemple de cette troisième sous-transaction, une incohérence est détectée par le gestionnaire (GIDT) entre la description de service stockée dans la mémoire (25) et la demande d'invocation du serveur enabler de messages multimédia (MMS). Une telle erreur peut être détectée par exemple lorsque la description du service prévoit l'envoi d'un e-mail. Les deux premières étapes (14, 15) sont analogues aux deux premières étapes (4, 5) de la première sous-transaction (R') concernant le serveur de localisation (LOC). Puis l'incohérence est détectée lors de l'exécution de la méthode de démasquage, comme illustré avec le schéma correspondant de la figure 3. Le moteur de traçabilité (29) enregistre des informations statistiques (16) représentatives de l'échec de la transaction. Ensuite, le gestionnaire d'identifiant transactionnel (GIDT) envoie, via la première interface de communication (21), une réponse négative (17) à l'élément serveur enabler (MMS). Ce dernier (MMS) notifie au fournisseur d'offres de service (31) le refus d'autorisation (18) d'envoi de message court multimédia. Pour finir, le gestionnaire d'identifiant transactionnel (GIDT) émet, via l'interface de notification des transactions (22), un événement transactionnel de type fin de reprise ROLLBACK (ET) pour signifier au système externe (40) que le service de bout en bout a échoué, le nombre de reprise de la transaction sur erreur étant dépassé. Cet événement ROLLBACK (ET) notifie que la transaction est annulée. Dans un mode de réalisation de l'invention, des données fournies avec l'événement transactionnel ROLLBACK (ET) sont transmises à un gestionnaire de dialogue et permettent de facturer ou non le service.

L'invention va à présent être décrite en liaison avec les figures 3 et 4.

La figure 3 représente les méthodes avec des logiques d'états associées aux interactions entre les éléments serveurs enablers (31) et le gestionnaire (GIDT). La méthode de masquage dite Mask du gestionnaire d'identifiant transactionnel (GIDT) retrouve dans un premier temps (202) les informations de l'offre ciblée (203) pour l'identifiant (UserId) à partir de l'adresse technique (201) et de la pluralité d'offres de service stockée dans la mémoire (25). Ensuite, la méthode Mask contrôle l'accès (204) d'un utilisateur abonné à l'offre de service (203) et émet soit un refus d'accès (R1) soit déclenche la méthode Start (S).

La méthode de démasquage dite Unmask du gestionnaire d'identifiant transactionnel (GIDT) retrouve dans un premier temps (205) les informations de l'offre ciblée (206) à partir de données représentatives de l'adresse technique et l'identifiant transactionnel (trid) et à partir de ladite pluralité des offres. Ensuite, comme illustré à la figure 3, la méthode Unmask contrôle l'accès (207) d'un partenaire (33) à l'élément serveur enabler (LOC, SMS, MMS) et vérifie (208) que la requête faite à l'élément serveur (LOC, SMS, MMS) est en correspondance avec le contexte actuel de la transaction. Puis, dans le cas où une mise à jour est nécessaire, la méthode Unmask se poursuit en signalant à l'élément serveur enabler (LOC, SMS, MMS) que le gestionnaire d'identifiant transactionnel (GIDT) est en attente d'une mise à jour, retourne (210) le numéro MSISDN ou identification (UserId) analogue associé à l'identifiant transactionnel opaque (trid), se met en attente (211) de la mise à jour Update, puis vérifie (302) que la mise à jour reçue contient les informations nécessaire pour la réalisation de l'offre pour soit émettre une méthode Completed (C) soit une méthode Error (E). Un refus d'accès (R2) est notifié lorsque l'accès n'a pas été autorisé lors du contrôle (207). Dans le mode de réalisation de la figure 3, une étape de contrôle (209) de mise à jour intervient après l'étape de vérification (208), pour activer directement la réalisation de l'offre avec une méthode Completed (C) dans le cas où la mise à jour Update n'est pas nécessaire.

La figure 4 présente les méthodes de communication entre un fournisseur de service (33) et le gestionnaire d'identifiant transactionnel (GIDT) servant à l'ouverture et à la fermeture d'une transaction. La méthode OpenTransaction est émise par un fournisseur de service à valeur ajoutée (33) vers l'interface pour fournisseurs (23) du gestionnaire (GIDT) pour contrôler l'accès (100) d'un partenaire (33) à un abonné de l'opérateur et produire soit un refus d'accès (R3) soit déclencher une méthode Start (S). La méthode CloseTransaction , émise par un fournisseur (33) vers l'interface pour fournisseurs (23) du gestionnaire (GIDT), génère un événement permettant de débloquer l'attente « TimeOut » de la logique du gestionnaire d'identifiant transactionnel (GIDT).

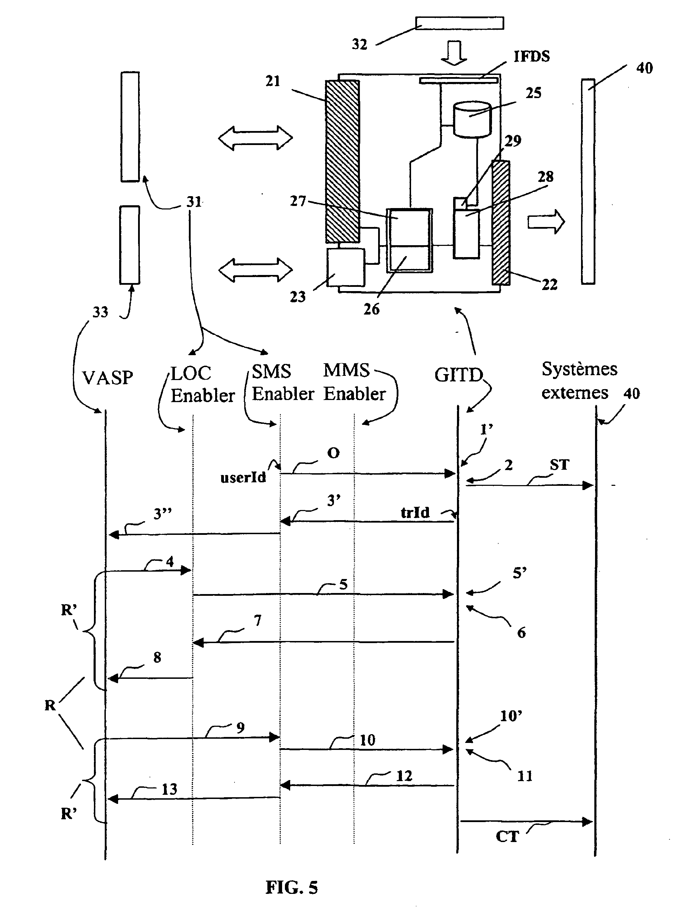

L'invention va à présent être décrite en liaison avec la figure 5.

En mode Pull/MO, la cinématique de livraison d'un service présente quelques différences par rapport à un fonctionnement en mode Push. La figure 5 illustre le cas d'un service décrit dans la mémoire (25) comme étant composé d'une demande de localisation suivie de l'envoi d'un message court SMS. Comme pour le mode Push, le déroulement du service, notamment les invocations vers les enablers, est renseigné dans la description du service et l'adresse technique du fournisseur d'offres de service (31) est connue par le gestionnaire (GIDT).

Tout d'abord, une demande de service d'un utilisateur doit être envoyée à un élément serveur enabler pour les messages (SMS), par l'intermédiaire d'un message MO transmis à partir du téléphone mobile de l'utilisateur. L'élément serveur enabler (SMS) intercepte alors la demande de service issue de l'utilisateur. Le grand compte de l'enabler (SMS) étant associé à une adresse technique du service, l'enabler (SMS) demande donc l'ouverture (O) d'une transaction au gestionnaire d'identifiant transactionnel (GIDT) pour l'utilisateur et service concerné. Cette requête d'ouverture (O), adressée à la première interface de communication (21) du gestionnaire (GIDT), est décrite de manière séquentielle avec un lot de primitives ouvertes et notifie une identification de l'utilisateur (UserId). Une analyse (1') de la requête (O) est alors effectuée et, en cas d'autorisation par les moyens de contrôle (26) du gestionnaire (GIDT), une commande BEGIN (ST) est générée par le moteur transactionnel (28) pour notifier un événement de début de transaction au système externe (40).

Un identifiant de transaction (trid) correspondant au service et à l'utilisateur est retourné (3') à l'enabler grand compte de messages courts (SMS). Ensuite, le fournisseur de service à valeur ajoutée (33) reçoit (3") la requête utilisateur sous la forme d'un message court envoyé à partir de l'enabler (SMS), sans toutefois connaître l'identité exacte de celui-ci car seul l'identifiant transactionnel (trid) lui est fourni. Les sous-transactions (R') peuvent alors être réalisées de la même façon que dans le mode de communication en mode Push (figure 1). A la fin de la dernière sous-transaction (R'), le gestionnaire d'identifiant transactionnel (GIDT) détecte le bon achèvement de la réalisation (R) de la transaction pour le service. Il notifie au système externe (40) que le service a été délivré de bout en bout pour l'utilisateur concerné, par génération d'un événement transactionnel COMMIT (CT).

Un des avantages du procédé selon l'invention est de permettre de gérer une session de service à un abonné utilisant plusieurs enablers du réseau de l'opérateur, en générant des événements sur l'avancement de sa réalisation, ce qui permet par exemple de facturer un service en fonction du nombre de sous-transactions réellement effectuées.

Un autre des avantages de l'invention par rapport aux techniques existantes est que l'opérateur peut garantir la confidentialité des données de l'utilisateur vis-à-vis des fournisseurs de service.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

### ANNEXE

**Adresse technique** : chaîne de caractères décrivant pour un enabler un service donné. Une adresse technique peut être un message court ou short-code dans le cas des médias SMS et GD (exemple « 2222 »), ou une adresse URL dans le cas du média Wap (exemple : http://wap.sfr.net). La chaîne de caractères constituant l'adresse technique peut aussi se terminer par le caractère *.
**CAMEL** : Customized Applications for Mobile network Enhanced Logic. (nom générique d'applications pour les mobiles)
**DTD** : Définition Type de Document
**GD** : Gestionnaire de Dialogue
**GID** : Gestionnaire d'Identifiant
**GIDT** : Gestionnaire d'identifiant Transactionnel
**GO** : Gestionnaire d'Offre
**LOC enabler**: Plate-forme de localisation
**SMS enabler** : Plate-forme permettant d'envoyer des messages courts
**MMS enabler** : Plate-forme pour envoyer des messages multimédia
**IHM** : Interaction Homme - Machine
**MO/MT** : Mobile Originated / Mobile Terminated
**MS-ISDN:** Mobile Station - Integrated Services Digital Network. C'est le numéro d'appel du téléphone mobile.
**OSA** : Open Service Access (définit une interface avec un réseau de radiotéléphonie mobile)
**PARLAY** : équivalent du OSA pour le réseau fixe.
**UIT** : Union Internationale des Télécommunications
**VASP** : Value Added Service Provider
**WAP** : Protocole d'application sans fil (Wireless Application Protocol)
**WAP-server** : serveur WAP pouvant être utilisé par les téléphones mobiles via une passerelle WAP (WAP-gateway) traduisant dans un format compatible avec Intemet les informations transmises sur un réseau mobile et qui est capable d'effectuer la conversion inverse
**XML** : eXtensible Mark-up Language. Méta langage proche du HTML.

## Revendications

1. Procédé de contrôle avec gestion d'un identifiant opaque d'utilisateur de la livraison complète d'un service utilisant au moins un serveur (31), **caractérisé en ce qu'**il est réalisé par l'intermédiaire d'un moyen serveur d'identifiant transactionnel (GIDT) stockant dans une mémoire (25) pour chaque utilisateur une description d'une pluralité d'offres de service souscrite par l'utilisateur auprès de fournisseurs de service à valeur ajoutée (33), ledit moyen serveur d'identifiant transactionnel (GIDT) comprenant un module de gestion (27) permettant d'associer à un utilisateur ou groupe d'utilisateurs et à au moins un service déterminé un identifiant transactionnel opaque (trid), ledit procédé comprenant les étapes suivantes :
- émission par un serveur (31) ayant intercepté une demande de service d'un utilisateur ou par un desdits fournisseurs de service (33) d'une requête d'ouverture de transaction (1) d'au moins un service faisant appel à au moins un serveur déterminé (31) réalisant des sous-transactions (R'), cette requête (1) étant décrite de manière séquentielle avec un lot de primitives ouvertes et adressée à une interface de communication (21, 23) du moyen serveur d'identifiant transactionnel (GIDT) et notifiant une identification de l'utilisateur (UserId),
- analyse (1') de la requête et génération d'un identifiant transactionnel opaque (trid) par des moyens de gestion et de contrôle (26, 27) du serveur d'identifiant transactionnel (GIDT), puis
- une étape de réalisation (R) de la transaction utilisant l'identifiant transactionnel opaque (trid).

2. Procédé selon la revendication 1, **caractérisé en ce que** l'étape d'analyse (1') comprend une vérification par le module de gestion (27) de la correspondance des serveurs déterminés (31) avec une offre de service répertoriée accessible pour l'utilisateur parmi la pluralité d'offres de service et un contrôle de l'autorisation d'ouverture de la transaction par des moyens de contrôle (26) du moyen serveur d'identifiant transactionnel (GIDT), pour le service fourni par les serveurs déterminés (LOC. SMS, MMS) et l'utitisateur spécifié, en fonction notamment de l'identification de l'utilisateur (UserId).

3. Procédé selon la revendication 1 ou 2, **caractérisé en ce que** l'étape de réalisation (R) de la transaction est initiée par un fournisseur de service à valeur ajoutée (33) ayant reçu l'identifiant transactionnel opaque (trid) de la part du moyen serveur d'identifiant transactionnel (GIDT), le fournisseur de service (33) effectuant une demande à un serveur déterminé (31), avec l'identifiant transactionnel opaque (trid) en paramètre, d'un service déterminé constituant une sous-transaction, pour déclencher en réponse sur ledit serveur déterminé (LOC, SMS, MMS) l'envoi vers le serveur d'identifiant transactionnel (GIDT) d'une requête (5) de démasquage « unmask » permettant à partir de l'identifiant opaque (trid) la fourniture d'un numéro d'identification (UserId) non opaque correspondant à l'identifiant transactionnel opaque (trid), un contrôle (5', 10') étant ensuite réalisé par les moyens de contrôle (26) du moyen serveur d'identifiant transactionnel (GITD) pour vérifier si le serveur déterminé (LOC, SMS, MMS) est autorisé ou non pour ce service et pour cet utilisateur, de sorte qu'en cas d'autorisation, le numéro d'identification (UserId) non opaque est transmis (7, 12) via une interface de communication dite interface enabler (21) vers le serveur déterminé (31) pour permettre la réalisation de la sous-transaction (R').

4. Procédé selon l'une quelconque des revendications 1 à 3, **caractérisé en ce que** l'identifiant transactionnel (trid), composé d'au maximum 15 digits, est conforme au plan de numérotation UIT-T E-164 et le numéro d'identification (UserId) non opaque est le numéro MSISDN.

5. Procédé selon l'une quelconque des revendications 1 à 4, dans lequel le moyen serveur d'identifiant transactionnel (GIDT) comporte, d'une part un moteur transactionnel (28) générant des émissions d'événements transactionnels constitués de l'une ou l'autre des commandes suivantes : BEGIN (ST), COMMIT (CT), ROLLBACK (ET) et d'autre part d'un moteur de traçabilité (29) consignant dans la mémoire (25) chaque événement du moteur transactionnel (28) et l'ensemble des informations émises pendant l'utilisation du moyen serveur d'identifiant transactionnel (GIDT).

6. Procédé selon l'une quelconque des revendications 1 à 5, **caractérisé en ce que** l'identifiant transactionnel opaque (trid) est envoyé (3) au fournisseur de service valeur ajoutée (33) après la mémorisation dans la mémoire (25) du moyen serveur d'identifiant transactionnel (GIDT) d'un contexte transactionnel indiquant notamment :
- un numéro d'identification (UserId) de l'utilisateur,
- l'identifiant transactionnel (trid),
- l'offre associée à la transaction,
- l'état d'avancement de la transaction pour l'offre associée à celle-ci.

7. Procédé selon la revendication 6, dans lequel l'envoi (3) de l'identifiant transactionnel opaque (trid) au fournisseur de service à valeur ajoutée (33) est précédé en outre d'une génération d'un événement transactionnel représentatif d'un début de transaction vers au moins un système externe (40), par l'intermédiaire d'une seconde interface de communication du moyen serveur d'identifiant dite interface de notification des transactions (22).

8. Procédé selon la revendication 7, dans lequel la génération d'un événement transactionnel représentatif d'un début de transaction vers au moins un système externe (40) s'effectue par une commande BEGIN (ST) générée par un moteur transactionnel (28) du moyen serveur d'identifiant transactionnel (GIDT).

9. Procédé selon la revendication 7 ou 8, dans lequel le moyen serveur d'identifiant transactionnel (GIDT) transmet, depuis l'interface de notification des transactions (22) à au moins un système externe (40), des données représentatives de la réalisation complète de l'offre par une commande COMMIT (CT) générée par le moteur transactionnel (28) pour indiquer au système externe (40) par exemple de facturation que la transaction est complètement réalisée.

10. Procédé selon l'une quelconque des revendications 7 à 9, dans lequel le moyen serveur d'identifiant transactionnel, émet, via l'interface de notification des transactions (22), un événement transactionnel de type fin de reprise ROLLBACK pour signifier à au moins un système externe (40) que le nombre de reprise de la transaction sur erreur est dépassé et que la transaction est annulée pour fournir des données à un gestionnaire de dialogue et pour facturer ou non le service.

11. Procédé selon l'une quelconque des revendications 1 à 10, dans lequel les moyens de gestion et de contrôle (26, 27) du serveur d'identifiant transactionnel (GIDT) effectuent l'analyse (1') de la requête d'ouverture de transaction notamment par résolution d'une correspondance entre une adresse technique de service notifiée dans la requête (1) d'ouverture de transaction et une offre de service répertoriée parmi la pluralité de descriptions d'offres de service stockées dans la mémoire (25) du moyen serveur d'identifiant transactionnel (GIDT).

12. Procédé selon l'une quelconque des revendications 1 à 11, dans lequel la mémoire du moyen serveur d'identifiant transactionnel (GIDT) stocke des descriptions d'offres de service validées par lesdits fournisseurs (31), saisies par l'intermédiaire d'une troisième interface de communication dite interface de fourniture des descriptions de service (IFDS).

13. Procédé selon l'une quelconque des revendications 1 à 12, dans lequel la description d'une offre de service comprend des données formulées dans un méta langage ou forme équivalente permettant aux moyens de contrôle de moyen serveur d'identifiant de contrôler le bon déroulement du service et d'en détecter le début et la fin.

14. Procédé selon l'une quelconque des revendications 1 à 13, dans lequel le moyen serveur d'identifiant transactionnel (GIDT) comporte une interface de communication supplémentaire (23) destinée aux fournisseurs de services à valeur ajoutée (33), la première interface (21) étant destinée aux serveurs déterminés (31).

15. Procédé selon l'une quelconque des revendications 1 à 14, dans lequel le moyen serveur d'identifiant transactionnel (GITD) comporte une logique interne réalisant les méthodes suivantes : Start (S), Completed (C), Error (E), Mask, Unmask, Update, OpenTransaction, CloseTransaction.

16. Procédé selon la revendication 15, dans lequel la méthode Start (S) du moyen serveur d'identifiant transactionnel (GIDT) génère (S1) un identifiant transactionnel (trid), crée (S2) un contexte transactionnel en mémoire, génère un événement transactionnel de type BEGIN (ST) et retourne l'identifiant transactionnel (trid) au fournisseur de service à valeur ajoutée (33).

17. Procédé selon la revendication 15 ou 16, dans lequel la méthode Completed (C) du moyen serveur d'identifiant transactionnel (GIDT) détermine par un test (C1) si une sous-transaction (R') de la transaction a été réalisée (C0), modifie (C2) en conséquence le contexte transactionnel, détermine, en scrutant la description de l'offre (C3) s'il est nécessaire que le moyen serveur d'identifiant transactionnel (GIDT) attende (C5) un événement extérieur, positionne la logique soit en attente d'un temps écoulé «TimeOut » soit d'une fermeture de transaction « CloseTransaction », vérifie (C4) si la transaction est achevée et génère un événement transactionnel de type COMMIT (CT).

18. Procédé selon l'une quelconque des revendications 15 à 17, dans lequel la méthode Error (E) du moyen serveur d'identifiant transactionnel (GIDT) vérifie si le nombre de reprise sur erreur est dépassé et dans l'affirmative génère un événement transactionnel de type ROLLBACK (ET).

19. Procédé selon l'une quelconque des revendications 15 à 18, dans lequel la méthode Mask est émise par un serveur déterminé (31) pour retrouver (202) les informations de l'offre ciblée (203) à partir de l'adresse technique (201) et de ladite pluralité d'offres, contrôler l'accès (204) d'un utilisateur abonné à l'offre de service et émettre soit un refus d'accès (R1) soit déclencher la méthode Start (S).

20. Procédé selon l'une quelconque des revendications 15 à 19, dans lequel la méthode Unmask est émise par un serveur déterminé (31) pour retrouver (205) les informations de l'offre ciblée (206) à partir de données représentatives de l'adresse technique et l'identifiant transactionnel (trid) et à partir de ladite pluralité des offres, contrôler l'accès (207) d'un fournisseur (33) partenaire au serveur déterminé (31), vérifier (208) que la requête faite à ce serveur déterminé (31) est en correspondance avec le contexte actuel de la transaction et signaler audit serveur déterminé (31) que le moyen serveur d'identifiant transactionnel (GIDT) est en attente d'une mise à jour, retourner (210) le numéro MSISDN associé à l'identifiant transactionnel opaque (trid), se mettre en attente (211) de la mise à jour, puis vérifier (302) que la mise à jour reçue contient les informations nécessaires pour la réalisation de l'offre pour soit émettre une méthode Completed (C) soit une méthode Error (E).

21. Procédé selon l'une quelconque des revendications 15 à 20, dans lequel la méthode Update est émise par un serveur déterminé (31) et constituée par la mise en état d'attente (211) de mise à jour concernant la réalisation de la requête du serveur d'identifiant transactionnel (GIDT).

22. Procédé selon l'une quelconque des revendications 15 à 21, dans lequel la méthode OpenTransaction est émise par un fournisseur de services à valeur ajoutée (33) pour contrôler l'accès (100) d'un partenaire à un abonné de l'opérateur et produire soit un refus d'accès (R3) soit déclencher une méthode Start (S).

23. Procédé selon l'une quelconque des revendications 17 à 22, dans lequel la méthode CloseTransaction est émise par un fournisseur de services à valeur ajoutée (33) et génère un événement permettant de débloquer l'attente « TimeOut » de la logique du moyen serveur d'identifiant transactionnel (GIDT).

## Patentansprüche

1. Verfahren zum Steuern, einschließlich Management, eines opaken Anwenderidentifizierers der vollständigen Lieferung eines Dienstes unter Verwendung wenigstens eines Servers (31), **dadurch gekennzeichnet, dass** es über ein Transaktionsidentifizierer-Servermittel (GIDT) ausgeführt wird, das in einem Speicher (25) für jeden Anwender eine Beschreibung mehrerer Dienstangebote speichert, die von dem Anwender bei Mehrwert-Dienstanbietem (33) unterschrieben worden sind, wobei das Transaktionsidentifizierer-Servermittel (GIDT) ein Management-Modul (27) aufweist, das ermöglicht, einem Anwender oder einer Gruppe von Anwendern und wenigstens einem bestimmten Dienst einen opaken Transaktionsidentifizierer (trid) zuzuordnen, wobei das Verfahren die folgenden Schritte umfasst:
- Senden einer Anforderung zum Eröffnen einer Transaktion (1) wenigstens eines Dienstes, der wenigstens einen bestimmten Server (31) erfordert, der Untertransaktionen (R') ausführt, durch einen Server (31), der eine Dienstanforderung eines Anwenders empfangen hat, oder durch einen der Dienstanbieter (33), wobei diese Transaktionseröffnungsanforderung (1) mit einem Satz von offenen Primitiven, die an eine Kommunikationsschnittstelle (21, 23) des Transaktionsidentifizierer-Servermittels (GIDT) adressiert sind und eine Anwenderidentifizierung (User-Id) angeben, sequentiell beschrieben wird,
- Analysieren (1') der Anforderung und Erzeugen eines opaken Transaktionsidentifizierers (trid) durch die Management- und Steuermittel (26, 27) des Transaktionsidentifizierer-Servers (GIDT), anschließend
- einen Schritt des Ausführens (R) der Transaktion unter Verwendung des opaken Transaktionsidentifizierers (trid).

2. Verfahren nach Anspruch 1, **dadurch gekennzeichnet, dass** der Analyseschritt (1') eine durch das Management-Modul (27) erfolgende Verifikation der Entsprechung der bestimmten Server (31) mit einem verzeichneten Dienstangebot, auf das vom Anwender unter mehreren Dienstangeboten zugegriffen werden kann, und eine Steuerung der Berechtigung zum Eröffnen der Transaktion durch die Steuermittel (26) des Transaktionsidentifizierer-Servermittels (GIDT) für den von den bestimmten Servern (LOC, SMS, MMS) bereitgestellten Dienst und den bestimmten Anwender insbesondere in Abhängigkeit von der Anwenderidentifizierung (UserId) umfasst.

3. Verfahren nach Anspruch 1 oder 2, **dadurch gekennzeichnet, dass** der Schritt (R) der Ausführung der Transaktion durch einen Mehrwert-Dienstanbieter (33) initiiert wird, der den opaken Transaktionsidentifizierer (trid) von seiten des Transaktionsidentifizierer-Servermittels (GIDT) empfangen hat, wobei der Dienstanbieter (33) eine Anfrage an einen bestimmten Server (31) mit parametrisiertem opakem Transaktionsidentifizierer (trid) eines bestimmten Dienstes, der eine Untertransaktion bildet, ausführt, um in Reaktion auf den bestimmten Server (LOC, SMS, MMS) das Schicken einer Demaskierungsanforderung (5) "unmask" auszulösen, die anhand des opaken Identifizierers (trid) die Lieferung einer nicht opaken Identifizierungsnummer (UserId), die dem opaken Transaktionsidentifizierer (trid) entspricht, ermöglicht, wobei anschließend durch die Steuermittel (26) des Transaktionsidentifizierer-Servermittels (GIDT) eine Steuerung (5', 10') ausgeführt wird, um zu verifizieren, ob der bestimmte Server (LOC, SMS, MMS) für diesen Dienst und für diesen Anwender berechtigt ist oder nicht, derart, dass im Fall der Berechtigung die nicht opake Identifizierungsnummer (UserId) über eine Kommunikationsschnittstelle, die Enabler-Schnittstelle (21) genannt wird, an den bestimmten Server (31) übertragen wird, um die Ausführung der Untertransaktion (R') zu ermöglichen.

4. Verfahren nach einem der Ansprüche 1 bis 3, **dadurch gekennzeichnet, dass** der Transaktionsidentifizierer (trid), der aus höchstens 15 Stellen gebildet ist, mit der Nummierungsebene UIT-T E-164 konform ist und die nicht opake Identifizierungsnummer (LTserId) die MSISDN-Nummer ist.

5. Verfahren nach einem der Ansprüche 1 bis 4, bei dem das Transaktionsidentifizierer-Servermittel (GIDT) einerseits einen Transaktionsmotor (28) umfasst, der Transaktionsereignis-Sendungen erzeugt, die aus dem einen oder dem anderen der folgenden Befehle gebildet sind: BEGIN (ST), COMMIT (CT), ROLLBACK (ET), und andererseits einen Verfolgbarkeitsmotor (29) umfasst, der in dem Speicher (25) jedes Ereignis des Transaktionsmotors (28) und die Gesamtheit der Informationen, der während der Verwendung des Transaktionsidentifizierer-Servermittels (GIDT) gesendet werden, hinterlegt.

6. Verfahren nach einem der Ansprüche 1 bis 5, **dadurch gekennzeichnet, dass** der opake Transaktionsidentifizierer (trid) an den Mehrwert-Dienstanbieter (33) geschickt wird, nachdem in dem Speicher (25) des Transaktionsidentifizierer-Servermittels (GIDT) ein Transaktionskontext gespeichert worden ist, der insbesondere angibt:
- eine Identifizierungsnummer (UserId) des Anwenders,
- den Transaktionsidentifizierer (trid),
- ein der Transaktion zugeordnetes Angebot,
- den Fortschrittszustand der Transaktion für das ihr zugeordnete Angebot.

7. Verfahren nach Anspruch 6, bei dem dem Schicken (3) des opaken Transaktionsidentifizierers (trid) an den Mehrwert-Dienstanbieter (33) außerdem eine Erzeugung eines Transaktionsereignisses vorhergeht, das einen Beginn einer Transaktion an wenigstens ein externes System (40) über eine zweite Kommunikationsschnittstelle des Identifizierer-Servermittels, die Transaktionsmeldeschnittstelle (22) genannt wird, darstellt.

8. Verfahren nach Anspruch 7, bei dem die Erzeugung eines Transaktionsereignisses, das einen Beginn einer Transaktion an wenigstens ein externes System (40) darstellt, durch einen Befehl BEGIN (ST) erfolgt, der durch einen Transaktionsmotor (28) des Transaktionsidentifizierer-Servermittels (GIDT) erzeugt wird.

9. Verfahren nach Anspruch 7 oder 8, bei dem das Transaktionsidentifizierer-Servermittel (GIDT) von der Transaktionsmeldeschnittstelle (22) an wenigstens ein externes System (40) Daten überträgt, die die vollständige Ausführung des Angebots durch einen von dem Transaktionsmotor (28) erzeugten Befehl COMMIT (CT) darstellen, um dem externen System (40), beispielsweise ein Fakturierungssystem, anzuzeigen, dass die Transaktion vollständig ausgeführt worden ist.

10. Verfahren nach einem der Ansprüche 7 bis 9, bei dem das Transaktionsidentifizierer-Servermittel über die Transaktionsmeldeschnittstelle (22) ein Transaktionsereignis des Typs ROLLBACK-Wiederaufnahmeende sendet, um wenigstens einem externen System (40) zu melden, dass die Anzahl von Wiederaufnahmevorgängen der Transaktion bei einem Fehler überschritten ist und dass die Transaktion annulliert wird, um an einem Dialog-Manager Daten zu liefern und um den Dienst zu fakturieren oder nicht.

11. Verfahren nach einem der Ansprüche 1 bis 10, bei dem die Management-und Steuermittel (26, 27) des Transaktionsidentifizierer-Servers (GIDT) die Analyse (1') der Transaktionseröffnungsanforderung insbesondere für die Auflösung einer Entsprechung zwischen einer technischen Adresse des in der Transaktionseröffnungsanforderung (1) gemeldeten Dienstes und einem verzeichneten Dienstangebot unter mehreren Dienstangebot-Beschreibungen, die im Speicher (25) des Transaktionsidentifizierer-Servermittels (GIDT) gespeichert sind, ausführen.

12. Verfahren nach einem der Ansprüche 1 bis 11, bei dem der Speicher des Transaktionsidentifizierer-Servermittels (GIDT) Beschreibungen von Dienstangeboten speichert, die von den Anbietern validiert werden, die über eine dritte Kommunikationsschnittstelle, die Dienstbeschreibungs-Lieferschnittstelle IFDS genannt wird, erfässt werden.

13. Verfahren nach einem der Ansprüche 1 bis 12, bei dem die Beschreibung eines Dienstangebots Daten umfasst, die in einer Metasprache oder in äquivalenter Form formuliert sind, was den Steuermitteln des Identifizierer-Servers ermöglicht, den richtigen Ablauf des Dienstes zu steuern und hiervon den Anfang und das Ende zu erfassen.

14. Verfahren nach einem der Ansprüche 1 bis 13, bei dem das Transaktionsidentifizierer-Servermittel (GIDT) eine zusätzliche Kommunikationsschnittstelle (23) umfasst, die für die Mehrwert-Dienstanbieter (33) bestimmt ist, wobei die erste Schnittstelle (21) für die bestimmten Server (31) bestimmt ist.

15. Verfahren nach einem der Ansprüche 1 bis 14, bei dem das Transaktionsidentifizierer-Servermittel (GIDT) eine interne Logik aufweist, die die folgenden Abläufe ausführt: Start (S), Completed (C), Error (E), Mask, Unmask, Update, OpenTransaction, CloseTransaction.

16. Verfahren nach Anspruch 15, bei dem der Vorgang Start (S) des Transaktion sidentifizierer-Servermittels (GIDT) einen Transaktionsidentifizierer (trid) erzeugt (S1), im Speicher einen Transaktionskontext erzeugt (S2), ein Transak-tionsereignis des Typs BEGIN (ST) erzeugt und den Transaktionsidentifizierer (trid) zu dem Mehrwert-Dienstanbieter (33) zurückleitet.

17. Verfahren nach Anspruch 15 oder 16, bei dem der Vorgang Completed (C) des Transaktionsidentifizierer-Servermittels (GIDT) durch einen Test (C1) feststellt, ob eine Untertransaktion (R') der Transaktion ausgeführt worden ist (C0), als Folge den Transaktionskontext modifiziert (C2), durch Untersuchen der Beschreibung des Angebots feststellt (C3), ob es notwendig ist, dass das Transaktionsidentifizierer-Servermittel (GIDT) ein externes Ereignis abwartet (C5), die Logik entweder eine Ablaufzeit "TimeOut" warten lässt oder die Transaktion schließen lässt "CloseTransaction", verifiziert (C4), ob die Transaktion beendet ist, und ein Transaktionsereignis des Typs COMMIT (CT) erzeugt.

18. Verfahren nach einem der Ansprüche 15 bis 17, bei dem der Vorgang Error (E) des Transaktionsidentifizierer-Servermittels (GIDT) verifiziert, ob die Wiederaufnahmeanzahl bei einem Fehler überschritten ist, wobei sie im positiven Fall ein Transaktionsereignis des Typs ROLLBACK (ET) erzeugt.

19. Verfahren nach einem der Ansprüche 15 bis 18, bei dem der Vorgang Mask durch einen bestimmten Server (31) ausgesendet wird, um die Informationen des anhand der technischen Adresse (201) und der mehreren Angebote angesprochenen Angebots (203) wiederzugewinnen, den Zugriff (204) eines auf das Dienstangebot abonnierten Anwenders zu steuern und entweder eine Zugriffsverweigerung (R1) auszusenden oder den Vorgang Start (S) auszulösen.

20. Verfahren nach einem der Ansprüche 15 bis 19, bei dem der Vorgang Unmask von einem bestimmten Server (31) ausgesendet wird, um die Informationen des Angebots (206), das anhand von Daten, die die technische Adresse und den Transaktionsidentifizierer (trid) repräsentieren, und anhand der mehreren Angebote angesprochen wird, wiederzugewinnen, um den Zugriff (207) eines Partner-Anbieters (33) auf den bestimmten Server (31) zu steuern, um zu verifizieren (208), dass die an diesen bestimmten Server (31) gerichtete Anforderung mit dem aktuellen Kontext der Transaktion in Übereinstimmung ist, und um dem bestimmten Server (31) zu melden, dass das Transaktionsidentifizierer-Servermittel (GIDT) auf eine Aktualisierung wartet, um die MSISDN-Nummer, die dem opaken Transaktionsidentifizierer (trid) zugeordnet ist, zurückzuleiten, um auf die Aktualisierung zu warten (211) und um zu verifizieren (302), dass die empfangene Aktualisierung die Informationen enthält, die für die Ausführung des Angebots notwendig sind, um entweder einen Vorgang Completed (C) oder einen Vorgang Error (E) auszusenden.

21. Verfahren nach einem der Ansprüche 15 bis 20, bei dem der Vorgang Update von einem bestimmten Server (31) ausgesendet wird und durch das Versetzen in einen Zustand (211) des Wartens auf die Aktualisierung bezüglich der Ausführung der Anforderung des Transaktionsidentifizierer-Servers (GIDT) gebildet ist.

22. Verfahren nach einem der Ansprüche 15 bis 21, bei dem der Vorgang OpenTransaction von einem Dienstanbieter mit zugeschriebenem Wert (33) ausgesendet wird, um den Zugriff (100) eines Partners auf einen Abonnenten des Operators zu steuern und um entweder eine Zugriffsverweigerung (R3) zu erzeugen oder einen Vorgang Start (S) auszulösen.

23. Verfahren nach einem der Ansprüche 17 bis 22, bei dem der Vorgang CloseTransaction von einem Mehrwert-Dienstanbieter (33) ausgesendet wird und ein Ereignis erzeugt, das die Entriegelung des Wartens "TimeOut" der Logik des Transaktionsidentifizierer-Servermittels (GIDT) ermöglicht.

## Claims

1. Method of controlling, with the management of an opaque user identifier, the complete delivery of a service using at least one server (31), **characterised in that** it is achieved by means of a transactional identifier server means (GIDT) storing in a memory (25) for each user a description of a plurality of service offers subscribed to by the user from added-value service providers (33), said transactional identifier server means (GIDT) comprising a management module (27) making it possible to associate an opaque transactional identifier (trid) with a user or group of users and with at least one predetermined service, said process comprising the following steps:
- transmission by a server (31) that has intercepted a service request from a user, or by one of said service providers (33), of a request to open a transaction (1) of at least one service requiring at least one predetermined server (31) performing subtransactions (R'), this request (1) being described sequentially with a batch of open primitives and addressed to a communication interface (21, 23) of the transactional identifier server means (GIDT) and notifying a user identification (Userid),
- analysis (1) of the request and generation of an opaque transactional identifier (trid) by management and control means (26, 27) of the transactional identifier server (GIDT), then
- a step of performing (R) the transaction using the opaque transactional identifier (trid).

2. Method according to Claim 1, **characterised in that** the analysis step (1') comprises a verification by the management module (27) of the matching of the predetermined servers (31) with a listed service offer accessible to the user from among the plurality of service offers and a check on the authorisation to open the transaction by control means (26) of the transactional identifier server means (GIDT), for the service provided by the predetermined servers (LOC, SMS, MMS) and the specified user, depending particularly on the user identification (Userid).

3. Method according to Claim 1 or 2, **characterised in that** the step of performing (R) the transaction is initiated by an added-value service provider (33) that has received the opaque transactional identifier (trid) from the transaction identifier server means (GIDT), the service provider (33) making a request to a predetermined server (31) with the opaque transactional identifier (trid) as a parameter, for a predetermined service constituting a subtransaction, in order to trigger in response on said predetermined server (LOC, SMS, MMS) the sending to the transactional identifier server (GIDT) of an unmasking request (5) making it possible, from the opaque identifier (trid), to provide a non-opaque identification number (Userid) corresponding to the opaque transactional identifier (trid), a check (5', 10') then being made by the control means (26) of the transactional identifier server means (GIDT) in order to check whether or not the predetermined server (LOC, SMS, MMS) is authorised for this service and this user, so that, in the case of authorisation, the non-opaque identification number (Userid) is transmitted (7, 12) via a communication interface known as an enabler interface (21) to the predetermined server (31) in order to allow the performance of the subtransaction (R').

4. Method according to any one of Claims 1 to 3, **characterised in that** the transactional identifier (trid), composed of a maximum of 15 digits, is in accordance with the UIT-T numbering plan E-164 and the non-opaque identification number (Userid) is the MSISDN number.

5. Method according to any one of Claims 1 to 4, in which the transactional identifier server means (GIDT) comprises on the one hand a transactional engine (28) generating transactional event transmissions constituted by one or other of the following commands: BEGIN (ST), COMMIT (CT), ROLLBACK (ET), and on the other hand a traceability engine (29) logging in the memory (25) each event of the transactional engine (28) and all the information transmitted during the use of the transactional identifier server means (GIDT).

6. Method according to any one of Claims 1 to 5, **characterised in that** the opaque transactional identifier (trid) is sent (3) to the added-value service provider (33) after storage, in the memory (25) of the transactional identifier server means (GIDT), of a transactional context indicating in particular:
- an identification number (Userid) for the user,
- the transactional identifier (trid),
- the offer associated with the transaction,
- the state of progress of the transaction for the offer associated therewith.

7. Method according to Claim 6, in which the sending (3) of the opaque transactional identifier (trid) to the added-value service provider (33) is also preceded by the generation of a transactional event representing an incipient transaction to at least one external system (40), via a second communication interface of the identifier server means referred to as the transaction notification interface (22).

8. Method according to Claim 7, in which the generation of a transactional event representing an incipient transaction to at least one external system (40) is effected by a BEGIN command (ST) generated by a transactional engine (28) of the transactional identifier server means (GIDT).

9. Method according to Claim 7 or 8, in which the transactional identifier server means (GIDT) transmits, from the transaction notification interface (22) to at least one external system (40), data representing the complete implementation of the offer by a COMMIT command (CT) generated by the transactional engine (28) in order to indicate to the external, for example invoicing, system (40) that the transaction is completely performed.

10. Method according to any one of Claims 7 to 9, in which the transactional identifier server means transmits, via the transaction notification interface (22), a transactional event of the ROLLBACK end-of-repeat type in order to indicate to at least one external system (40) that the number of repeats of the transaction after an error is exceeded and that the transaction is cancelled in order to supply data to a dialogue manager and to invoice the service or not.

11. Method according to any one of Claims 1 to 10, in which the management and control means (26, 27) of the transactional identifier server (GIDT) perform the analysis (1') of the transaction opening request, in particular by resolving a match between a technical service address notified in the transactional opening request (1) and a service offer listed among the plurality of service offer descriptions stored in the memory (25) of the transactional identifier server means (GIDT).

12. Method according to any one of Claims 1 to 11, in which the memory of the transactional identifier server means (GIDT) stores descriptions of service offers validated by said suppliers (31), captured via a third communication interface referred to as the service description supply interface (IFDS).

13. Method according to any one of Claims 1 to 12, in which the description of a service offer comprises data formulated in a metalanguage or equivalent form enabling the control means of the identifier server means to check the correct operation of the service and to detect the start and end thereof.

14. Method according to any one of Claims 1 to 13, in which the transactional identifier server means (GIDT) comprises a supplementary communication interface (23) intended for the added-value service providers (33), the first interface (21) being intended for the predetermined servers (31).

15. Method according to any one of Claims 1 to 14, in which the transactional identifier server means (GIDT) comprises an internal logic implementing the following methods: Start (S), Completed (C), Error (E), Mask, Unmask, Update, OpenTransaction, CloseTransaction.

16. Method according to Claim 15, in which the Start method (S) of a transactional identifier server means (GIDT) generates (S1) a transactional identifier (trid), creates (S2) a transactional context in memory, generates a transactional event of the BEGIN type (ST) and returns the transactional identifier (trid) to the added-value service provider (33).

17. Method according to Claim 15 or 16, in which the Completed method (C) of the transactional identifier server means (GIDT) determines by a test (C1) whether a subtransaction (R') of the transaction has been performed (C0), modifies (C2) the transactional context accordingly, determines, by scrutinising the description of the offer (C3), whether it is necessary for the transactional identifier server means (GIDT) to await (C5) an external event, positions the logic either awaiting an elapsed time "TimeOut" or a transaction closure "CloseTransaction", checks (C4) whether the transaction is completed and generates a transactional event of the COMMIT type (CT).

18. Method according to any one of Claims 15 to 17, in which the Error method (E) of the transactional identifier server means (GIDT) checks whether the number of repeats after error is exceeded and, if so, generates a transactional event of the ROLLBACK type (ET).

19. Method according to any one of Claims 15 to 18, in which the Mask method is transmitted by a predetermined server (31) in order to find (202) the targeted offer information (203) from the technical address (201) and said plurality of offers, to control the access (204) of a subscribing user to the service offer and either to issue a refusal of access (R1) or to trigger the Start method (S).

20. Method according to any one of Claims 15 to 19, in which the Unmask method is transmitted by a predetermined server (31) in order to find (205) the information on the targeted offer (206) from data representing the technical address and the transactional identifier (trid) and, from said plurality of offers, to check the access (207) of a partner supplier (33) to the predetermined server (31), to check (208) that the request made to this predetermined server (31) matches the current context of the transaction and to indicate to said predetermined server (31) that the transactional identifier server means (GIDT) is awaiting an update, to return (201) the MSISDN number associated with the opaque transactional identifier (trid), to await (211) the update, and then to check (302) that the update received contains the information necessary for implementing the offer in order to transmit either a Completed method (C) or an Error method (E).

21. Method according to any one of Claims 15 to 20, in which the Update method is transmitted by a predetermined server (31) and is constituted by the queuing (211) of updating concerning the implementation of the request from the transactional identifier server (GIDT).

22. Method according to any one of Claims 15 to 21, in which the OpenTransaction method is transmitted by an added-value service provider (33) in order to check the access (100) of a partner to a subscriber of the operator and either to produce a refusal of access (R3) or to trigger a Start method (S).

23. Method according to any one of Claims 17 to 22, in which the CloseTransaction method is transmitted by an added-value service provider (33) and generates an event making it possible to unblock the "TimeOut" wait state of the logic of the transactional identifier server means (GIDT).
